# EUROPÄISCHE PATENTSCHRIFT

(11) **EP 3 684 192 B1**
(45) Veröffentlichungstag und Bekanntmachung des Hinweises auf die Patenterteilung: **13.11.2024**
(21) Anmeldenummer: 18808207.7
(22) Anmeldetag: 20.09.2018
(51) Int. Cl.: A23K 40/10, A23K 40/35, A23K 50/10, A23K 20/142, A23K 20/158, A23K 20/174, A23K 20/20

(54) **VERFAHREN ZUR HERSTELLUNG EINES NAHRUNGSMITTELS UND/ODER NAHRUNGSMITTELZUSATZSTOFFS FÜR TIERFUTTER FÜR WIEDERKÄUER, EINE VERWENDUNG UND EIN NAHRUNGSMITTEL**
METHOD FOR PRODUCING A FOOD AND/OR FOOD ADDITIVE FOR ANIMAL FEED FOR RUMINANTS, USE AND FOOD
PROCÉDÉ DE FABRICATION D'UN PRODUIT ALIMENTAIRE ET/OU D'UN ADDITIF ALIMENTAIRE POUR ALIMENTS DESTINÉS AUX RUMINANTS, AINSI QU'UNE UTILISATION ET UN PRODUIT ALIMENTAIRE CORRESPONDANTS

(30) Priorität: 20.09.2017 DE 102017008784
(43) Veröffentlichungstag der Anmeldung: 29.07.2020
(73) Patentinhaber: Josera GmbH & Co. Kg, 83924 Kleinheubach (DE)
(72) Erfinder: LEPPER, Markus, 63924 Kleinheubach (DE)
(74) Vertreter: Nitz, Astrid
(86) Internationale Anmeldenummer: PCT/DE2018/000265
(87) Internationale Veröffentlichungsnummer: WO 2019/057229

(56) Entgegenhaltungen:
- WO-A1-2006/085774
- WO-A1-2007/048369
- WO-A1-2015/135961
- DE-A1- 102009 014 138
- GB-A- 1 306 018
- US-A- 3 056 724
- US-A- 5 928 687

## Beschreibung

Die Erfindung betrifft ein Verfahren zur Herstellung eines Nahrungsmittels und/oder Nahrungsmittelzusatzstoffs für Tierfutter für Wiederkäuer nach dem Oberbegriff von Anspruch 1, eine Verwendung nach dem Oberbegriff von Anspruch 44 12 und ein Nahrungsmittel nach dem Oberbegriff von Anspruch 13.

Bekannt ist es, dass im Pansen von Wiederkäuern die meisten verfügbaren "Nährstoffe" ab- und umgebaut werden. Viele wichtige und für das Tier vorteilhaften Nähr- und Wirkstoffe kommen bei regulärer Fütterung nicht im Labmagen und Dünndarm an. Um dies trotzdem zu bewerkstelligen, hat man in den letzten 50 Jahren diverse Verfahren entwickelt diese Wirkstoffe vor dem Abbau im Pansen zu schützen und eine Freigabe im Dünndarm zu gewährleisten, wie beispielsweise Sprühverfahren, Tropfverfahren, Coatingverfahren etc.

WO 2015/135961 A1 offenbart ein pelletiertes Wiederkäuerfutter angereichert mit pansen-stabilen Inhaltsstoffen.

WO 2006/085774 A1 offenbart eine Zusammensetzung zu Schutz von Wiederkäuern, eine Verwendung und ein Verfahren.

Die Verfahren weisen jedoch den Nachteil auf, dass sie aufwendig sind und auch Zusatzstoffe beinhalten, die das Tier beeinträchtigen können, beispielsweise durch aufgebrachte Polymere, oder futtermittelrechtlich nicht zugelassene Coatings z.B. Methacrylate, Polyvenylpyroledon.

Aufgabe der vorliegenden Erfindung ist es, ein einfaches und sicheres Verfahren zur Herstellung eines Nahrungsmittels und/oder Nahrungsmittelzusatzstoffs für Tierfutter für Wiederkäuer bereitzustellen.

Die Aufgabe wird gelöst durch ein Verfahren zur Herstellung eines Nahrungsmittels und/oder Nahrungsmittelzusatzstoffs für Tierfutter für Wiederkäuer, wobei ein Wirkstoff, insbesondere Vitamine und/oder Spurenelemente und/oder Aminosäuren und/oder Vitalstoffe und/oder Arzneimittel und/oder Futtermittel, zumindest teilweise in eine Matrix umfassend im Wesentlichen Fett, insbesondere als Fettmischung, insbesondere umfassend Triglycerid, wobei die Matrix in Form von Matrixpulver, insbesondere Fettpulver, mit dem Wirkstoff vorgemischt und mit einer Presse, insbesondere Matrizenpresse, insbesondere Flachmatrizenpresse und/oder Compactor, zu Pellets gepresst wird, wobei eine Verarbeitungstemperatur während und/ nach dem Pressen unterhalb des Schmelzpunkts liegt, wobei der Schmelzpunkt des Fetts, insbesondere der Fettmischung, etwa 45 - 80°C beträgt.

Die Erfindung bezweckt die Herstellung im Wesentlichen pansenstabiler Futtermittel, insbesondere Pellets, bei welchen Wirkstoffe mit möglichst geringem Verlust den Pansen passieren und im nachfolgenden Verdauungstrakt verdaut werden mit einem kostengünstigen Verfahren. Die Erfindung bietet zudem ein besonders einfaches und sicheres Herstellungsverfahren, bei dem Fett, insbesondere eine Fettmischung, zusammen mit dem zu schützenden Wirkstoff gemischt und gepresst wird und dann direkt gebrauchsfertig ist. Wirk- und Schutzstoffe werden einfach gemischt und in einer Pelletpresse verpresst. Hierdurch ist ein besonders einfaches und kostengünstiges Verfahren gegeben. Zu schützende Wirkstoffe können dabei beispielsweise alle Vitamine und/oder alle Spurenelemente und/oder Aminosäuren und/oder Vitalstoffe und/oder Arzneimittel sein, weiterhin Futtermittel aller Art, einzeln oder in Kombinationen. Gegenüber den bekannten Verfahren beispielsweise der Agglomeration zu Klümpchen entfällt ein Erwärmungsschritt oder auch eine Kühlung, wobei einfache Schutzstoffe wie Fette in unterschiedlicher Form und Zusammensetzung eingesetzt werden. Es findet keine zusätzliche Erwärmung der Mischung/Maschine/Prozess statt, die Temperatur nach der Presse beträgt etwa 35 - 50°C, liegt also unterhalb des Schmelzpunkts. Es muss für den Pansenschutz keine weitere Behandlung stattfinden, beispielsweise Ummantelung. Bei dem Prozess findet keine Reaktion statt, es erfordert kein Trocknen, Kühlen, Sintern, Kristallisieren, Voragglomerieren. Es findet kein Wirkungsverlust bei Beschädigung, beispielsweise wie beim Coating oder Schichtprodukten, statt. Kein Schmelzen, Erwärmen, Sprühen, mehrere Schichten erforderlich. Es ist ein einfaches, preiswertes Verfahren.

Häufig werden im Stand der Technik zum Pansenschutz Fettsäuresalze z.B. Ca-Salze eingesetzt, da sie durch ihren hohen Schmelzpunkt und ihrer Hydrophobicität insbesondere einfacher zu verarbeiten sind. Diese haben jedoch physiologisch große Nachteile. Durch das Fehlen von Glycerin im Molekül benötigt der Organismus, nach Resorption der Fettsäuren aus dem Darm, körpereigenes Glycerin um diese wieder zu nutzbarem Fett aufzubauen. Bei Hochleistungskühen oder nach der Geburt sind glycoplastische Verbindungen, wie z.B. Glycerin Mangelware. Durch die Fettsäuresalze wird somit eine Unterzuckerung/Ketose verstärkt. Die für die Erfindung verwendeten reinen Fette, beispielsweise Triglyceride, liefern ihr Glycerin selbst, so dass dadurch der Blutzuckerspiegel nicht beeinflußt wird. Es müssen dementsprechend im vorliegenden Verfahren vorteilhafterweise keine Fettsäuresalze eingesetzt werden, z.B. Ca-Salze, die seifig schmecken und - wie dargestellt - eine Unterzuckerung bei Hochleistungskühen verstärken.

Reine Fette bzw. Fettsäuren werden jedoch schon ab 45/50°C extrem weich und unpressbar, so dass höhere Anforderungen / Schwierigkeitsgrad beim Verarbeiten von Fetten und Fettsäuren entstehen können. Dies konnte aber durch die vorliegende Erfindung überraschenderweise trotz der Einfachheit des erfindungsgemäßen Verfahrens ausgeglichen werden und ist zudem besser für die Verträglichkeit bei den damit gefütterten Nutztieren.

Vorteilhaft ist es, wenn das Matrixpulver, insbesondere das Fettpulver, Größen und/oder eine Größenverteilung von etwa 0,1 mm - 3 mm, insbesondere vorteilhaft 0,1 mm - 1 mm, insbesondere etwa 0,1 mm - 0,5 mm, insbesondere etwa 0,2 mm - 0,8 mm aufweist.

Vorteilhaft ist es, wenn der eingesetzte Wirkstoffanteil etwa 0,5 - 90 Gewichts%, insbesondere etwa 1 - 60 Gewichts%, insbesondere etwa 30 - 60 Gewichts% beträgt.

Vorteilhaft ist es, wenn das Fett Triglycerid, insbesondere etwa 20 - 100 Gewichts% des Fettanteils des Fettanteils umfasst, insbesondere zu über etwa 50 Gewichts%, insbesondere etwa 80 - 100 Gewichts% des Fettanteils oder etwa 40 - 99 Gewichts% des Fettanteils, insbesondere etwa 40 - 70 Gewichts% des Fettanteils.

Vorteilhaft ist es, wenn Pellets hergestellt werden mit etwa 0,5 - 15 mm Durchmesser, insbesondere 2 - 6 mm, und einer Länge von etwa 1 - 30 mm.

Vorteilhaft ist es, wenn nach dem Pressen der Pellets eine Zerkleinerung vorgenommen wird, insbesondere durch Krümeln und/oder Mahlen und/oder Reiben und/oder Brechen und/oder Schneiden und/oder Häckseln und/oder Quetschen, insbesondere zu einer Länge und/oder Durchmesser von etwa 0,1 - 5 mm.

Vorteilhaft ist es, wenn mehrmals nacheinander gepresst wird, insbesondere zweimal. Je nach Rezeptur und Schutzstärke werden die Pellets ein bis mehrfach verpresst. Dabei werden die Pellets vorteilhaft einfach noch einmal in die Presse gegeben und durchgepresst und somit auf einfache Weise die Struktur verbessert.

Vorteilhaft ist es, wenn als Parameter beim Pressen insbesondere zur Strukturbeeinflussung eingestellt werden: eine Ausgangstemperatur des Fettes und/oder von Zusatzstoffen und/oder Zuschläge für eine Strukturbildung und/oder Wärmeleitfähigkeit des Fettes und der Wirkstoffe, und/oder Geometrie der gepressten Pellets und/oder Größenverteilung im Matrixpulver.

Vorteilhaft ist es, wenn das Fett umfasst einzeln oder als Mischungen folgende Fette, insbesondere in gehärteter und/oder teilgehärteter und/oder fraktionierter und/oder umgeesterter Form: Rapsöl/Rüböl und/oder Baumwollsaatöl und/oder Palmöl und/oder Palmkernfett und/oder Palmkernöl und/oder Kokosfett und/oder Schweineschmalz und/oder Rindertalg und/oder Fischöl und/oder Weizenkeimöl und/oder Erdnussöl und/oder Sojaöl und/oder Milchfett und/oder Sonnenblumenöl und/oder Knochenöl und/oder Leinöl und/oder Olivenöl und/oder Sesamöl und/oder Maiskeimöl und/oder Rizinusöl, und/oder Algenöl und/oder Hanföl und/oder Distelöl und/oder Kakaobutter und/oder Babassufett, insbesondere mit Kettenlängen zwischen C 6 - C 34, insbesondere C 12 - C 22.

Vorteilhaft ist es, wenn ein Zusatz weiterer Komponenten, insbesondere durch freie Fettsäure mit einem Anteil von etwa 1 Gewichts% - 20 Gewichts%, insbesondere etwa 8 Gewichts% - 20 Gewichts%, am Gesamtgewicht der Pellets, und/oder Wachse und/oder Harze, vorgesehen ist.

Vorteilhaft ist es, wenn ein Wirkstofftransport bis in einen Bereich nach dem Pansen etwa 40 - 98 Gewichts% beträgt.

Die Aufgabe wird ebenfalls gelöst durch eine Verwendung von Fettpulver zum Pressen zu Pellets zur Einbettung von Wirkstoffen für die Wiederkäuernahrung, wobei es nach einem Verfahren nach Anspruch 1 bis 11 vorgenommen wird.

Die Aufgabe wird ebenfalls gelöst durch ein Nahrungsmittel für Tiere, umfassend gepresste Fettmatrix umfassend zumindest einen Wirkstoff, insbesondere Vitamine und/oder Spurenelemente und/oder Aminosäuren und/oder Vitalstoffe und/oder Arzneimittel und/oder Futtermittel, insbesondere in Form von Natriumselenat und/oder Natriumselenit und/oder organisches Selen, hergestellt nach einem Verfahren nach Anspruch 1 bis 11.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Tabellen 1 und 2 näher erläutert sind.

Wie in Tabellen 1 und 2 dargestellt, konnte die Wirksamkeit der erfindungsgemäßen Ergebnisse anhand von Stabilitätsprüfungen nachgewiesen werden. Dabei wurde eine definierte Menge Pellets in ein Übermaß an Pansensimulationspuffer (nach McDougall) gegeben, bei 39°C über den Testzeitraum geschüttelt und nach 6h und 24h die Pellets entnommen, die Flüssigkeit durch Filtration entfernt und getrocknet und die Originalpellets, sowie die "ausgelaugten" Pellets auf ihren Wirkstoffgehalt analysiert. Der verbleibende Anteil an Wirkstoff in den "ausgelaugten" Pellets wird als pansenstabiler Anteil bezeichnet, der einen Aufenthalt von beispielsweise 24h im Pansen überstehen würde. Es zeigt sich außerdem, dass eine Zerkleinerung beispielse beim Fressen oder zur Strukturanpassung im Futter nur eine geringe Reduktion des pansenstabilen Wirkstoffs zur Folge hat und keineswegs einen Totalverlust wie beispielsweise bei gecoateten Substanzen.

**Tab. 1 Stabilität der Wirkstoffpellets (Restwirkstoffgehalt in % nach Zeit) in McDougall-Puffer bei 39°C, Durchmesser etwa 6 mm, Fett umfassend 100% Triglycerid**

| | Pufferstabilität in % nach 6h | Pufferstabilität in % nach 24h |
|---|---|---|
| Pflanzenfettpulver:Methionin (40:60%) | 98,4% | 89,5% |
| Pflanzenfettpulver:Methionin (60:40%) | 99,5% | 97,1% |

**Tab. 2 Stabilität der Wirkstoffpellets (Restwirkstoffgehalt in % nach Zeit) in McDougall-Puffer bei 39°C, Durchmesser etwa 6 mm, Fett umfassend 100% Triglycerid**

| | Pufferstabilität Originalpellet nach 24h | Pufferstabilität zerkleinert,(Siebfraktion >1,4 - <3mm) nach 24h |
|---|---|---|
| Pflanzenfettpulver:Niacin (70:30%) | 93,6% | 61,5% |
| Pflanzenfettpulver:Niacin (50:50%) | 71,4% | 56,7% |

## Patentansprüche

1. Verfahren zur Herstellung eines Nahrungsmittels und/oder Nahrungsmittelzusatzstoffs für Tierfutter für Wiederkäuer, wobei ein Wirkstoff, insbesondere Vitamine und/oder Spurenelemente und/oder Aminosäuren und/oder Vitalstoffe und/oder Arzneimittel und/oder Futtermittel, zumindest teilweise in eine Matrix umfassend im Wesentlichen Fett, insbesondere als Fettmischung, insbesondere umfassend Triglycerid, wobei die Matrix in Form von Matrixpulver, insbesondere Fettpulver, mit dem Wirkstoff vorgemischt und mit einer Presse, insbesondere Matrizenpresse, insbesondere Flachmatrizenpresse und/oder Compactor, zu Pellets gepresst wird, wobei eine Verarbeitungstemperatur während und nach dem Pressen unterhalb des Schmelzpunkts liegt, wobei der Schmelzpunkt des Fetts, insbesondere der Fettmischung, etwa 45 - 80°C beträgt.

2. Verfahren nach Anspruch 1, **dadurch gekennzeichnet, dass** das Matrixpulver, insbesondere das Fettpulver, Größen und/oder eine Größenverteilung von etwa 0,1 mm - 3 mm, insbesondere vorteilhaft 0,1 mm - 1 mm, insbesondere etwa 0,1 mm - 0,5 mm, insbesondere etwa 0,2 mm - 0,8 mm aufweist.

3. Verfahren nach Anspruch 1 bis 2, **dadurch gekennzeichnet, dass** der eingesetzte Wirkstoffanteil etwa 0,5 - 90 Gewichts%, insbesondere etwa 1 - 60 Gewichts%, insbesondere etwa 30 - 60 Gewichts% beträgt.

4. Verfahren nach Anspruch 1 oder 3, **dadurch gekennzeichnet, dass** das Fett Triglycerid, insbesondere etwa 20 - 100 Gewichts% des Fettanteils des Fettanteils umfasst, insbesondere zu über etwa 60 Gewichts%, insbesondere etwa 80 - 100 Gewichts% des Fettanteils oder etwa 40 - 99 Gewichts% des Fettanteils, insbesondere etwa 40 - 70 Gewichts% des Fettanteils.

5. Verfahren nach einem der Ansprüche 1 bis 4, **dadurch gekennzeichnet, dass** der Schmelzpunkt des Fetts, insbesondere der Fettmischung, etwa 45 - 60°C oder etwa 50 - 70°C beträgt.

6. Verfahren nach Anspruch 1 bis 5 **dadurch gekennzeichnet, dass** Pellets hergestellt werden
mit etwa 0,5 - 15 mm Durchmesser, insbesondere 2 - 6 mm, und einer Länge von etwa 1 - 30 mm.

7. Verfahren nach Anspruch 1 bis 6, **dadurch gekennzeichnet, dass** nach dem Pressen der Pellets eine Zerkleinerung vorgenommen wird, insbesondere durch Krümeln und/oder Mahlen und/oder Reiben und/oder Brechen und/oder Schneiden und/oder Häckseln und/oder Quetschen, insbesondere zu einer Länge und/oder Durchmesser von etwa 0,1 - 5 mm.

8. Verfahren nach Anspruch 1 bis 7, **dadurch gekennzeichnet, dass** mehrmals nacheinander gepresst wird, insbesondere zweimal.

9. Verfahren nach Anspruch 1 bis 8, **dadurch gekennzeichnet, dass** als Parameter beim Pressen insbesondere zur Strukturbeeinflussung eingestellt werden: eine Ausgangstemperatur des Fettes und/oder von Zusatzstoffen und/oder Zuschläge für eine Strukturbildung und/oder Wärmeleitfähigkeit des Fettes und der Wirkstoffe, und/oder Geometrie der gepressten Pellets und/oder Größenverteilung im Matrixpulver,

10. Verfahren nach Anspruch 1 bis 9, **dadurch gekennzeichnet, dass** das Fett umfasst einzeln oder als Mischungen folgende Fette, insbesondere in gehärteter und/oder teilgehärteter und/oder fraktionierter und/oder umgeesterter Form: Rapsöl/Rüböl und/oder Baumwollsaatöl und/oder Palmöl und/oder Palmkemfett und/oder Palmkemöl und/oder Kokosfett und/oder Schweineschmalz und/oder Rindertalg und/oder Fischöl und/oder Weizenkeimöl und/oder Erdnussöl und/oder Sojaöl und/oder Milchfett und/oder Sonnenblumenöl und/oder Knochenöl und/oder Leinöl und/oder Olivenöl und/oder Sesamöl und/oder Maiskeimöl und/oder Rizinusöl, und/oder Algenöl und/oder Hanföl und/oder Distelöl und/oder Kakaobutter und/oder Babassufett, insbesondere mit Kettenlängen zwischen C 6 - C 34, insbesondere C 12 - C 22.

11. Verfahren nach einem der Ansprüche 1 bis 10, **dadurch gekennzeichnet, dass** ein Zusatz weiterer Komponenten, insbesondere durch freie Fettsäure mit einem Anteil von etwa 1 Gewichts% - 20 Gewichts%, insbesondere etwa 8 + Gewichts% - 20 Gewichts%, am Gesamtgewicht der Pellets, und/oder Wachse und/oder Harze, vorgesehen ist.

12. Verwendung von Fettpulver zum Pressen zu Pellets zur Einbettung von Wirkstoffen für die Wiederkäuernahrung, wobei es nach einem Verfahren nach Anspruch 1 bis 11 vorgenommen wird, wobei eine Verarbeitungstemperatur während und nach dem Pressen unterhalb des Schmelzpunkts liegt, wobei der Schmelzpunkt des Fetts, insbesondere der Fettmischung, etwa 45 - 80°C beträgt.

13. Nahrungsmittel für Tiere, umfassend gepresste Fettmatrix umfassend zumindest einen Wirkstoff, insbesondere Vitamine und/oder Spurenelemente und/oder Aminosäuren und/oder Vitalstoffe und/oder Arzneimittel und/oder Futtermittel, insbesondere in Form von Natriumselenat und/oder Natriumselenit und/oder organisches Selen, hergestellt nach einem Verfahren nach Anspruch 1 bis 11, wobei eine Verarbeitungstemperatur während und nach dem Pressen unterhalb des Schmelzpunkts liegt, wobei der Schmelzpunkt des Fetts, insbesondere der Fettmischung, etwa 45 - 80°C beträgt.

## Claims

1. Method for the production of a food and/or food additive for use in animal feed for ruminants, in which an active substance, in particular vitamins and/or trace elements and/or amino acids and/or vital substances and/or medicinal products and/or feedingstuffs, at least partly in a matrix containing essentially fat, in particular as a mixture of fat, in particular triglyceride, the matrix being pre-mixed with the active substance in the form of matrix powder, in particular fat powder, and pellets with a press, in particular matrix press, in particular flat matrix press and/or compactor whereas pressed at a processing temperature below the melting point during and after pressing, the melting point of the fat, and in particular the fat mixture, being approximately 45 to 80°C.

2. Method according to Claim 1, **characterised in that** the matrix powder, in particular the fat powder, has sizes and/or a size distribution of approximately 0,1 mm - 3 mm, in particular advantageously 0,1 mm - 1 mm, in particular about 0,1 mm - 0,5 mm, in particular about 0,2 mm - 0,8 mm.

3. Method according to Claims 1 to 2, **characterised in that** the active ingredient content used is approximately 0.5 to 90 by weight%, in particular about 1 to 60 by weight%, in particular about 30 to 60 by weight%.

4. Method according to Claim 1 or 3, **characterised in that** the fat comprises triglyceride, in particular about 20 - 100% by weight of the fat content, in particular about 50 % by weight, in particular about 80 - 100% by weight of the fat content or about 40 - 99 % by weight of the fat content, in particular about 40 - 70 % by weight of the fat content.

5. Method according to any of Claims 1 to 4, **characterised in that** the melting point of the fat, in particular the fat mixture, is about 45 - 60°C or about 50 - 70°C.

6. Method according to Claims 1 to 5, **characterised by** the production of pellets having a diameter of approximately 0.5 - 15 mm, in particular 2 - 6 mm, and a length of approximately 1-30 mm.

7. Method according to the claims 1 to 6, **characterised by** comminution after pressing of the pellets, in particular by crumbling and/or grinding and/or grinding and/or crushing and/or cutting and/or chopping and/or crushing, in particular to a length and/or diameter of approximately 0,1 - 5 mm.

8. Method of Claims 1 to 7, **characterised by** several presses in succession, in particular twice.

9. Method of Claims 1 to 8, **characterised in that** the parameters set during pressing, in particular to influence structure, are: an initial temperature of the fat and/or additives and/or additives and/or additives for structural formation and/or thermal conductivity of the fat and active ingredients, and/or geometry of the pressed pellets and/or size distribution in the matrix powder.

10. Method of Claims 1 to 9, **characterised in that** the fat comprises, individually or in mixtures, the following fats, in particular in hardened and/or partially hardened and/or fractionated and/or interesterified form: rapeseed/seed oil and/or cotton seed oil and/or palm kernel oil and/or palm kernel oil and/or coconut fat and/or lard and/or beef tallow and/or fish oil and/or wheat germ oil and/or peanut oil and/or soya oil and/or milk fat and/or sunflower oil and/or bone oil and/or linseed oil and/or olive oil and/or sesame oil and/or maize germ oil and/or castor oil, and/or algae oil and/or hemp oil and/or safflower oil and/or cocoa butter and/or babassufett, in particular with chain lengths between C 6 and C 34, in particular C 12 and C 22.

11. Method according to any of Claims 1 to 10 **characterised in that** it provides for the addition of further components, in particular free fatty acid containing approximately 1 - 20 weight%, in particular approximately 8 - 20 weight%, in the total weight of the pellets, and/or waxes and/or resins.

12. The use of fat powder for pressing into pellets for embedding active ingredients for ruminant food, carried out according to a method of claims 1 to 11, with a processing temperature below the melting point during and after pressing, with the melting point of the fat, in particular the fat mixture, being approximately 45 to 80°C.

13. Foodstuffs for animals, comprised fat matrix comprising at least one active substance, in particular vitamins and/or trace elements and/or amino acids and/or vital substances and/or pharmaceuticals and/or feedingstuffs, in particular in the form of sodium selenate and/or sodium selenite and/or organic selenium, produced by a method of claims 1 to 11, having a processing temperature during and after pressing below the melting point, the melting point of the fat, in particular the fat mixture, being approximately 45 to 80°C.

## Revendications

1. Procédé de fabrication d'une denrée alimentaire et/ou d'un additif alimentaire destiné à l'alimentation des ruminants, dans lequel une substance active, notamment des vitamines et/ou des oligo-éléments et/ou des acides aminés et/ou des substances vitales et/ou des médicaments et/ou des aliments pour animaux, est incorporée au moins en partie dans une matrice composée essentiellement de matières grasses, en particulier de triglycérides, prémélangée avec la substance active sous forme de poudre de matrice, notamment de poudre de matières grasses, et une presse, en particulier une presse à matrice, en particulier une presse à matrice plate et/ou un compacteur, est pressée en pellets, avec une température de traitement pendant et après le pressage inférieure au point de fusion, le point de fusion des graisses, en particulier du mélange de graisses, se situant approximativement entre 45 et 80 °C.

2. Procédé selon la revendication 1, **caractérisé par le fait que** la poudre matricielle, en particulier la poudre grasse, a des dimensions et/ou une répartition granulométrique d'environ 0,1 mm - 3 mm, en particulier de préférence de 0,1 mm - 1 mm, en particulier d'environ 0,1 mm - 0,5 mm, en particulier d'environ 0,2 mm - 0,8 mm.

3. Procédé selon les revendications 1 à 2, **caractérisés par le fait que** la proportion de substance active utilisée est d'environ 0,5 à 90 % en poids, en particulier d'environ 1 à 60 % en poids, en particulier d'environ 30 à 60 % en poids.

4. Procédé selon les revendications 1 ou 3, **caractérisés par le fait que** la matière grasse contient des triglycérides, en particulier environ 20 à 100 % en poids de la matière grasse, en particulier à plus de 50 % en poids de la matière grasse, en particulier à environ 80 à 100 % en poids de la matière grasse ou à environ 40 à 99 % en poids de la matière grasse, en particulier à environ 40 à 70 % en poids de la matière grasse.

5. Procédé selon l'une des revendications 1 à 4, **caractérisé par** un point de fusion de la graisse, en particulier du mélange de graisses, compris entre 45 et 60 °C ou entre 50 et 70 °C.

6. Procédé selon les revendications 1 à 5, **caractérisés par le fait que** les pastilles sont produites d'un diamètre d'environ 0,5 à 15 mm, en particulier de 2 à 6 mm, et d'une longueur d'environ 1 à 30 mm.

7. Procédé selon les revendications 1 à 6, **caractérisés par le fait qu'**après pressage des pellets, un broyage est effectué, notamment par broyage et/ou broyage et/ou frottement et/ou concassage et/ou découpage et/ou hachage et/ou pressage, notamment pour obtenir une longueur et/ou un diamètre d'environ 0,1 à 5 mm.

8. Procédé selon les revendications 1 à 7, **caractérisé par** le pressage successif de plusieurs fois, notamment deux fois.

9. Procédé selon les revendications 1 à 8, **caractérisés par le fait que**, lors du pressage, les paramètres suivants sont fixés en particulier pour influencer la structure : une température initiale de la graisse et/ou des additifs et/ou des ajouts pour la structuration et/ou la conductivité thermique de la graisse et des substances actives, et/ou la géométrie des pastilles pressées et/ou la répartition granulométrique dans la poudre matricielle.

10. Procédé selon les revendications 1 à 9, **caractérisé par le fait que** la matière grasse comprend, isolément ou sous forme de mélanges, les matières grasses suivantes, notamment sous forme durcie et/ou partiellement durcie et/ou fractionnée et/ou transestérifiée : huile de colza/huile de navette et/ou huile de coton et/ou huile de palme et/ou huile de palme et/ou huile de coco et/ou saindoux de porc et/ou de suif bovin et/ou huile de poisson et/ou huile de germe de blé et/ou Huile d'olive et/ou d'olive et/ou de sésame et/ou huile de ricin et/ou huile d'algues et/ou huile de chanvre et/ou huile de distel et/ou huile de cacao et/ou huile de babassou, et/ou huile d'olive et/ou huile de sésame et/ou huile de maïs et/ou huile de riz, et/ou huile d'algues et/ou huile de chanvre et/ou huile de distel et/ou beurre de cacao et/ou beurre de cacao et/ou fillet de babass.

11. Procédé selon les revendications 1 à 10, **caractérisé par** l'addition d'autres composants, notamment d'acides gras libres, dans une proportion d'environ 1 à 20 % en poids, et notamment d'environ 8 à 20 % en poids, par rapport au poids total des pastilles et/ou des cires et/ou des résines.

12. Utilisation de poudre de graisse pour le pressage en granulés afin d'incorporer des substances actives dans l'alimentation des ruminants, selon un procédé conforme aux revendications 1 à 11, à une température de transformation pendant et après le pressage inférieure au point de fusion, le point de fusion de la graisse, en particulier du mélange de graisses, se situant approximativement entre 45 et 80°C.

13. Aliments pour animaux, matrice gras pressée contenant au moins une substance active, notamment des vitamines et/ou des oligo-éléments et/ou des acides aminés et/ou des substances vitales et/ou des médicaments et/ou des aliments pour animaux, notamment sous forme de sélénate de sodium et/ou de sélénite de sodium et/ou de sélénium organique, obtenus selon un procédé conforme aux revendications 1 à 11, à une température de transformation pendant et après le pressage inférieure au point de fusion, le point de fusion de la matière grasse, en particulier le point F mélange, environ 45 - 80°C est.
